# EUROPÄISCHE PATENTSCHRIFT

(11) **EP 1 568 663 B1**
(45) Veröffentlichungstag und Bekanntmachung des Hinweises auf die Patenterteilung: **15.08.2012**
(21) Anmeldenummer: 04027162.9
(22) Anmeldetag: 16.11.2004
(51) Int. Cl.: C03B 9/193

(54) **Vorformstation einer Press-Blas-Glasformmaschine**
Preform station of a press-blow machine
Station de préformage d'une machine préssée-soufflée

(30) Priorität: 28.02.2004 DE 202004003097 U
(43) Veröffentlichungstag der Anmeldung: 31.08.2005
(73) Patentinhaber: Heye International GmbH, 31683 Obernkirchen (DE)
(72) Erfinder: Schneider, Wilhelm, 31749 Auetal (DE)
(74) Vertreter: Sobisch, Peter

(56) Entgegenhaltungen:
- EP-A- 1 120 381
- DE-A1- 3 638 677
- GB-A- 1 288 477
- US-A1- 2003 167 799
- PATENT ABSTRACTS OF JAPAN Bd. 1999, Nr. 13, 30. November 1999 (1999-11-30) & JP 11 209129 A (NIHON YAMAMURA GLASS CO LTD), 3. August 1999 (1999-08-03)

## Beschreibung

Die Erfindung bezieht sich auf eine Vorformstation entsprechend dem Oberbegriff des Anspruchs 1.

Derartige Vorformstationen sind im Hause der Anmelderin allgemein bekannt. Sie bestehen im Wesentlichen aus einer langgestreckten, aus einem Presszylinder und einem sich zu diesem koaxial erstreckenden Stempelzylinder gebildeten, einen Pressstempelmechanismus aufnehmenden Funktionseinheit, die sich durch die Öffnung eines Maschinengehäuses hindurcherstreckt und in dieser Öffnung mit der Maßgabe gehalten ist, dass Justierbewegungen rechtwinklig zu der Längsachse der Funktionseinheit möglich sind. Zu diesem Zweck ist eine brillenartige Aufnahme vorgesehen, mittels welcher die Funktionseinheit unter axialer Federvorspannung gegenüber dem Gehäuse, insbesondere der Berandung der genannten Öffnung, gehalten ist.

Ausgleichsbewegungen rechtwinklig zu der Längsachse der Funktionseinheit sind erforderlich mit Hinblick auf eine exakte zentrische Führung des Pressstempels relativ zu einem oberhalb dieser Funktionseinheit befindlichen Mündungswerkzeug einer Vorform. Funktionseinheiten dieser Art können einzeln in den genannten brillenartigen Aufnahmen angeordnet sein - es können jedoch auch zwei oder mehrere solcher Funktionseinheiten über brillenartige Aufnahmen zusammengefasst sein. Charakteristisch für diese Ausführungsform ist in jedem Fall, dass ein Zentrieren des Pressstempels relativ zu einem Mündungswerkzeug Bewegungen der gesamten Masse der Funktionseinheit erfordert und bereits aus diesem Grund mit einem dementsprechenden Kraftaufwand verbunden ist. Erschwert wird eine radiale Zentrierungsbewegung ferner durch den Umstand, dass die Funktionseinheit in Achsrichtung unter Federvorspannung steht. Hiermit in Zusammenhang stehende Reibungskräfte bringen einen beträchtlichen Verschleiß mit sich. Hinzutritt ein weiterer Nachteil, der bei einer Zusammenfassung mehrerer Funktionseinheiten in den genannten Aufnahmen gegeben ist, da in diesen Fällen individuelle Zentrierungen der einzelnen Funktionseinheiten nicht möglich sind. Dieser Umstand kann sich ebenfalls verschleißerhöhend auswirken.

Aus der DE 36 38 677 A1 ist eine Vorformstation dieser Art bekannt. Diese weist einen, in einem Splitring mit radialem Spiel gehaltenen Pressstempel auf, wobei durch zueinander fluchtende Führungsflächen des Mündungswerkzeugs, eines sich in Richtung von diesem fort gesehen anschließenden Deckringes, einer Anschlaghülse und einer Führungshülse zwar eine zentrierende Wirkung auf den Splitring ausgeübt wird, wobei jedoch eine den Pressstempel endgültig zentrierende Wirkung erst durch einen, in der Mündungsform angeordneten Führungsring stattfindet, und zwar ggf. unter radialen Ausgleichsbewegungen gegenüber dem Splitring. In jedem Fall erfolgt die Zentrierung des Pressstempels erst nachdem dieser bereits mit dem Glas innerhalb der Vorform in Berührung getreten ist.

Aus der GB 1 288 477 A ist eine weitere vergleichbare Vorformstation bekannt, bei welcher ein Pressstempel radial beweglich in einem Splitring angeordnet ist, der seinerseits mit einer Kolbenstange in fester Verbindung steht. In einem Führungsring, der einer Mündungsform vorgelagert ist, findet eine Zentrierung des Pressstempels statt, somit erst nach Einführung in die Vorform, d.h. unter Berührung mit dem dortigen Glas.

Die Zentrierung des Pressstempels in der Vorform, somit durch über das dortige Glas auf diesen ausgeübten Verdrängungskräften ist mit einem nicht unbeträchtlichen Energieaufwand, mit Schwergängigkeit und einem hiermit einhergehenden Verschleiß verbunden.

Es ist vor diesem Hintergrund die Aufgabe der Erfindung, eine Vorformstation der eingangs bezeichneten Art mit Hinblick auf genauere, insbesondere leichtgängigere Zentrierungsbewegungen hin auszugestalten, und zwar bei gleichzeitig vermindertem Verschleiß.

Gelöst ist diese Aufgabe bei einer solchen Funktionseinheit durch die Merkmale des Kennzeichnungsteils des Anspruchs 1.

Erfindungswesentlich ist hiernach, dass die Vorformstation in zwei Einheiten bzw. Baugruppen unterteilt ist, von denen die eine gegenüber der Vorform radial ausrichtbar ist, wohingegen die andere maschinenfest angeordnet ist. Gegenüber dem eingangs dargelegten Stand der Technik müssen somit für ein Ausrichten wesentlich geringere Massen bewegt werden, so dass ein dementsprechend geringerer Kraftaufwand erforderlich ist. Auch wird der Zentrierungsvorgang nicht durch hohe Federvorspannungen und hiermit einhergehende Reibungsverluste belastet. Es ergibt sich somit ein vergleichsweise leichtgängiger, verschleißarmer Betrieb. Die Ladebuchse und damit der Pressstempel werden nach der geschlossenen Vorform ausgerichtet, wobei eine Rückstellfeder das Überführen der Ladebuchse und damit des Pressstempels in die Ladestellung unterstützt. Zu überwinden sind bei der Zentrierung lediglich innere Reibungskräfte, die bei der radial orientierten Zentrierungsbewegung anfallen.

Die Gestaltung sowie die Führung der Ladebuchse sind mit der Maßgabe angelegt, dass der Zentrierungsvorgang praktisch dadurch eingeleitet werden kann, dass die Ladebuchse in eine Eingangsöffnung des Mündungswerkzeugs eingeführt wird.

Die Merkmale der Ansprüche 2 bis 5 sind auf konstruktive Maßnahmen gerichtet, welche die Einstellung einer in radialer Richtung leichtgängigen Zentrierungsbewegung der eingangs genannten zentrierungsfähigen Einheit der beiden Einheiten der Vorformstation betreffen. Es geht in allen Fällen um die Einrichtung radialer Bewegungsmöglichkeiten sowie um die Festlegung von Schnittstellen zwischen den beiden Einheiten.

Die Merkmale der Ansprüche 6 und 7 beziehen sich auf die Einrichtung einer Dichtung zur Führung eines Kühlfluids unter der Bedingung der relativen radialen Beweglichkeit der beiden Einheiten zueinander.

Durch Variierung der axialen Länge eines innerhalb der Ladebuchse angeordneten Distanzringes entsprechend den Merkmalen des Anspruchs 8 ist eine einfache Möglichkeit zur Definition der Tiefststellung des Pressstempels gegeben.

Ein besonderer weiterer Vorteil gegenüber dem eingangs dargelegten Stand der Technik ergibt sich daraus, dass jeder Pressstempel der gegebenenfalls mehrere Pressstempel sowie mehrere Vorformen aufweisenden Vorformstation individuell zentrierbar ist.

Die Erfindung wird im Folgenden unter Bezugnahme auf das in den Zeichnungen schematisch wiedergegebene Ausführungsbeispiel näher erläutert werden. Es zeigen:
Fig. 1 eine Darstellung einer erfindungsgemäßen Vorformstation im Längsschnitt sowie in der Tiefststellung des Pressstempels;
Fig. 2 eine Darstellung einer Vorformstation im Längsschnitt sowie in der Ladestellung des Pressstempels;

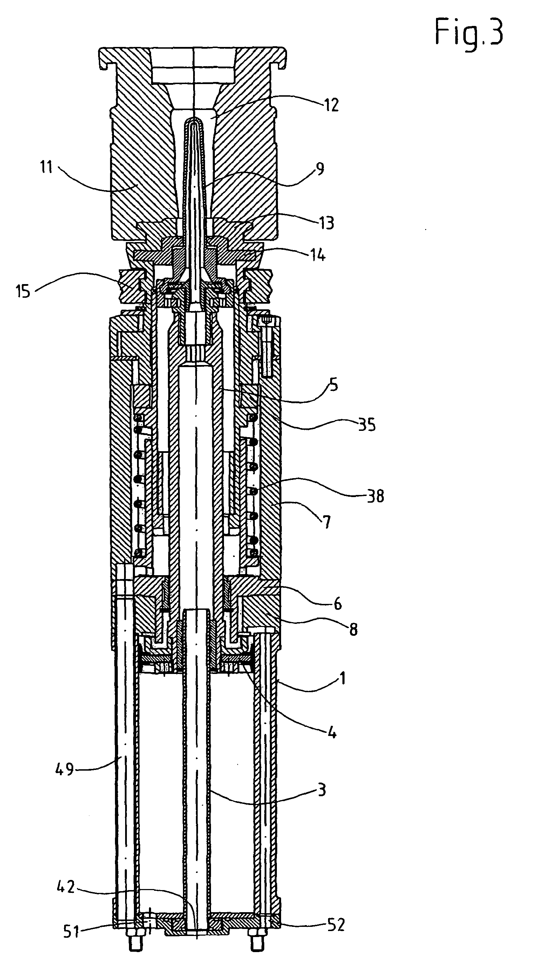

Fig. 3 eine Darstellung einer Vorformstation im Längsschnitt sowie in der Pressendstellung des Pressstempels;
Fig. 4 eine vergrößerte isolierte Darstellung der stationären, maschinenfesten Baugruppe im Längsschnitt;
Fig. 5 eine vergrößerte isolierte Darstellung von der radial einstellbaren Baugruppe im Längsschnitt und
Fig. 6 eine Schnittansicht entsprechend einer Ebene VI-VI der Fig. 1 in vergrößerter Darstellung.

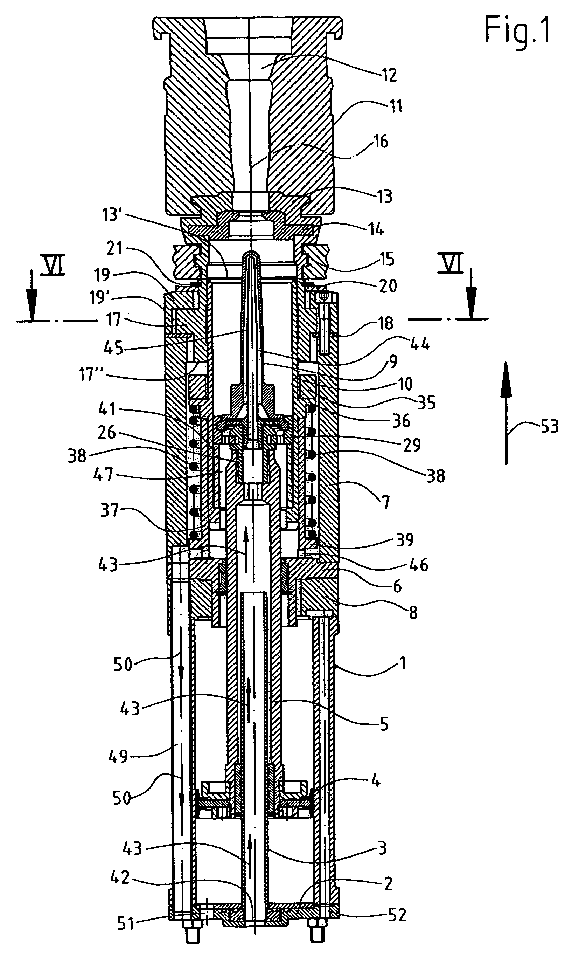

Mit 1 ist in Fig. 1 ein Presszylinder bezeichnet, in dessen in der Zeichnung unterseitigem Boden 2 ein Kühlluftstutzen 3 angeordnet ist. Auf dem sich koaxial zu dem Presszylinder 1 erstreckenden Kühlluftstutzen 3 ist ein Kolben 4 gleitfähig geführt, innerhalb dessen hohl ausgebildeter Kolbenstange 5 sich der Kühlluftstutzen 3 erstreckt. Die Kolbenstange 5 ist im Übrigen in einem Zwischenring 6 radial geführt, der zwischen einem Stempelzylinder 7 und einem den oberen Abschluss des Presszylinders 1 bildenden Kopfring 8 axial eingespannt ist. Der Stempelzylinder 7 erstreckt sich koaxial zu dem Presszylinder 1.

Das in der Zeichnung oberseitige Ende der Kolbenstange 5 steht in einer noch näher zu erläuternden Weise mit einem Pressstempel 9 in Verbindung, der im Übrigen innerhalb einer Ladebuchse 10 zentrisch geführt ist.

Mit 11 ist eine an sich bekannte, längsgeteilte, einen Formhohlraum 12 umschließende Vorform bezeichnet, die unterseitig ein ebenfalls längsgeteilt ausgebildetes Mündungswerkzeug 13 umgibt, welches seinerseits einen ungeteilt ausgebildeten Führungsring 14 umgibt. Das Mündungswerkzeug 13 ist in einem wiederum längsgeteilt ausgebildeten Mündungswerkzeughalter 15 gehalten. Das Gesamtsystem bestehend aus Mündungswerkzeughalter 15, Führungsring 14 und Mündungswerkzeug 13 ist koaxial mit der Achse 16 des Formhohlraums 12 ausgerichtet.

In der in Fig. 1 gezeigten untersten oder Tiefststellung des Pressstempels 9 befindet sich die Ladebuchse 10 unterhalb einer Eingangsöffnung 13' des Mündungswerkzeugs 13.

Ein Lagerring 17, innerhalb welchem die Ladebuchse 10 geführt ist, ist über eine Zwischenscheibe 18 auf dem Stempelzylinder 7 abgestützt und in dieser Position mittels eines Kopfringes 19 fixiert. Der Kopfring 19 wird seinerseits von einem Abdeckring 20 überlagert, dessen Anlage an der zugekehrten Seite des Kopfringes 19 mittels eines Sicherungsringes 21 gesichert ist.

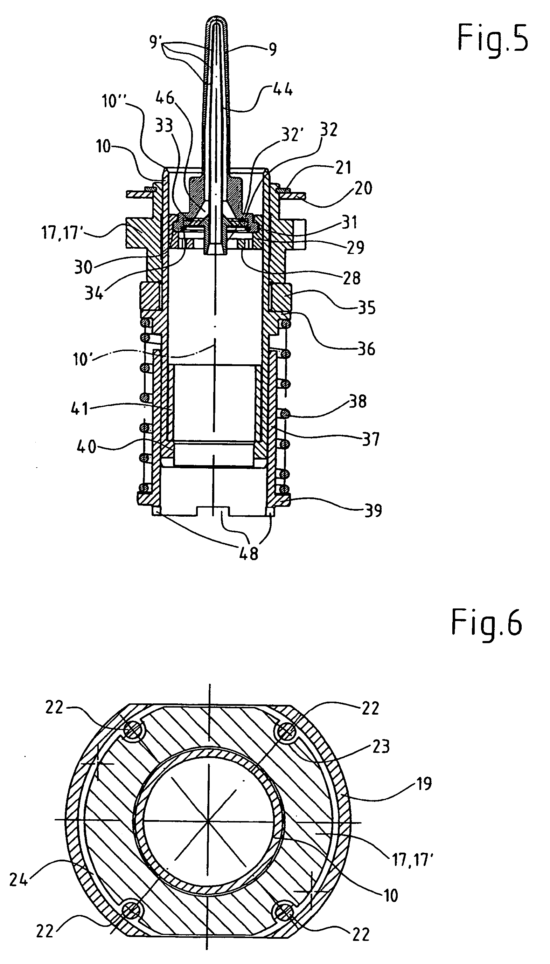

Wie insbesondere aus Fig. 6 hervorgeht, ist die Fixierung des Kopfringes 19 auf dem Stempelzylinder 7 durch Schrauben 22 gegeben, die in die äußere Peripherie des Lagerringes 17 eingeformte, in etwa halbkreisförmige Ausnehmungen 23 durchdringen. Zwischen den Schrauben 22 und dem Lagerring 17 besteht stets ein radiales Spiel.

Wesentlich ist, das auch zwischen sämtlichen radialen Außenkonturen des Lagerringes 17 und den diesem zugekehrten radialen Innenkonturen des Kopfringes 19 sowie der Zwischenscheibe 18 ein radiales Spiel 24 besteht, dessen Zweckbestimmung im Folgenden noch näher erläutert werden wird.

Fig. 6 zeigt dieses radiale Spiel 24 zwischen der Innenseite des Lagerringes 17 und der Außenseite eines an dem Lagerring angeformten Außenflansch 17', über welchen dieser auf der zugekehrten Stirnseite der Zwischenscheibe 18 aufliegt. Die Innenkonturen des Kopfrings 19 bilden einen Lagerspalt 19' des Stempelzylinders 7, innerhalb welchem der Lagerring 17 allseitig radial verschiebbar ist.

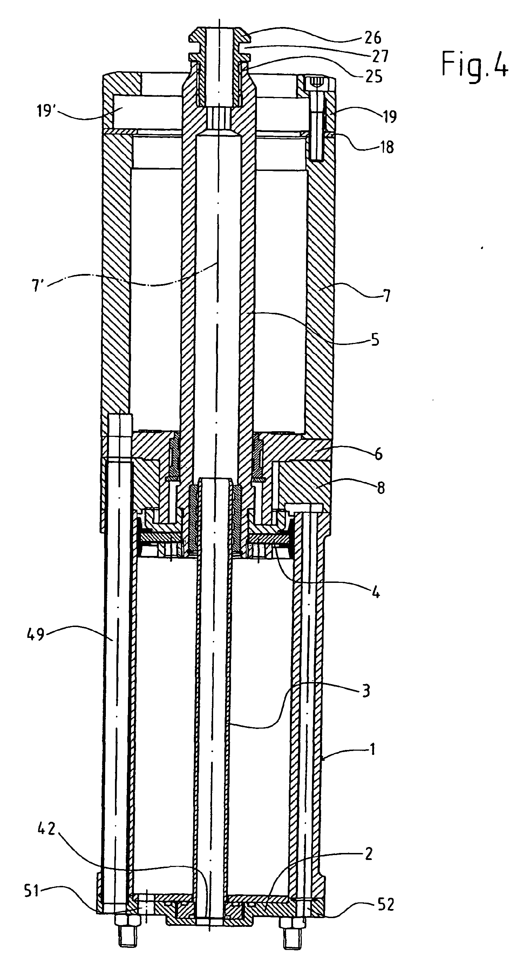

Wie insbesondere Fig. 4 erkennen lässt, endet das oberseitige Ende der Kolbenstange 5 in einer sich koaxial zu dem Stempelzylinder 7 erstreckenden Gewindebohrung 25, in welche ein Kupplungskopf 26 eingeschraubt ist. In den Kupplungskopf 26 ist eine Umfangsnut 27 eingeformt, die sich koaxial zu der Achse 7' des Stempelzylinders 7 erstreckt und die mit einem sich radial innenseitig erstreckenden Innenflansch 28 (Fig. 5) eines längsgeteilt ausgebildeten Kupplungsringes 29, auch Splitring 29 genannt, im Eingriff steht.

Wie insbesondere Fig. 5 erkennen lässt, weist der Splitring 29 eine global ringzylinderartige Gestalt auf, an deren Unterseite der genannte Innenflansch 28 angeformt ist, wobei radial innenseitig eine Ringnut 30 vorgesehen ist, die ihrerseits mit einem Flansch 31 des Pressstempels 9 im Eingriff steht.

Der Pressstempel 9 bildet an seinem, durch den Flansch 31 gekennzeichneten Abschnitt ein zylindrisches Teil, welches der Aufnahme eines Halteringes 32 dient, der oberseitig über eine Feder 33, z.B. eine Tellerfeder, an dem Pressstempel 9 abgestützt ist und dessen Position unterseitig durch einen Sicherungsring 34 definiert ist. Über den Flansch 31 ist der Pressstempel 7 in dem geschlossenen Splitring 29 eingespannt. Der an dem Splitring 29 angeformte Innenflansch 28 ist mit radialem Spiel in der Umfangsnut 27 des Kupplungskopfes 26 der Kolbenstange 5 aufgenommen.

Mit 35 ist ein Anschlagring bezeichnet, der die Ladebuchse 10 umgibt, und über welchen der Lagerring 17 axial auf einem an der Ladebuchse 10 angeformten Außenflansch 36 abgestützt ist. Das in allen Zeichnungsfiguren unterseitige Ende der Ladebuchse 10 ist innerhalb einer Stützbuchse 37 aufgenommen, wobei eine Rückstellfeder 38 an ihrem einen Ende auf einem an der Stützbuchse 37 angeformten Außenflansch 39 und an ihrem anderen Ende an der dem Anschlagring 35 gegenüberliegenden Seite des Außenflansches 36 abgestützt ist.

Der Haltering 32 ragt mit einem zentralen zylindrischen Ansatz 32' in den Kupplungskopf 26 und damit in die Kolbenstange 5 hinein. Mittels der genannten Feder 33 ist auf diesem Wege eine elastisch vorgespannte, dichtende Anlage des Halterings 32 an einer äußersten Ringfläche des Kupplungskopfes 26 gegeben. Wesentlich ist, das der Ansatz 32' innerhalb des Kupplungskopfes 26 radial allseitig verschiebbar ist.

Die Ladebuchse 10 bildet ferner an ihrem unterseitigen Ende einen sich radial einwärts erstreckenden Innenflansch 40, auf welchem eine innerhalb der Ladebuchse 10 angeordnete Distanzbuchse 41 aufliegt. Die Funktion dieser Distanzbuchse 41 wird im Folgenden noch erläutert werden.

Die Stützbuchse 37 ist unten radial gleitbar auf dem Zwischenring 6 des Presszylinders 1 abgestützt.

An der Stelle 42 in den Kühlluftstutzen 3 eintretende Kühlluft durchströmt diesen sowie die Kolbenstange 5 in Richtung der Pfeile 43, um anschließend durch den zentralen Hohlraum des Kupplungskopfes 26 hindurch in den einen Hohlraum umschließenden Pressstempel 9 einzutreten. Zu diesem Zweck ist innerhalb des Pressstempels 9 ein Kühlrohr 44 vorgesehen, welches sich mit Abstand innerhalb des Pressstempels 9 erstreckt und mit Durchbrechungen 9' (Fig. 5) versehen ist. Über diese Durchbrechungen 9' tritt die Kühlluft in einen Zwischenraum 45 zwischen dem Kühlrohr 44 und der Innenwandung des Pressstempels 9 aus, um diesen anschließend über Leitungselemente 46 (Fig. 5) und den Kupplungsring 29, einen Ringraum 47 zwischen der Kolbenstange 5 und der Distanzbuchse 41 und bodenseitige Ausnehmungen 48 der Stützbuchse 37 in Richtung von sich innerhalb der Wand des Presszylinders 1 erstreckenden Längsbohrungen 49 in Richtung der Pfeile 50 zu verlassen. Der Boden 2 des Presszylinders 1 beinhaltet somit Anschlussorgane für die Zufuhr sowie die Abfuhr von Kühlluft.

Der Kolben 4 ist beidseitig beaufschlagbar. Mit 51 und 52 sind Anschlussöffnungen für Druckluft bezeichnet, die nach Maßgabe der gewünschten Bewegungsrichtung des Kolbens 4 mit Druckfluid beaufschlagt oder entlüftet werden.

Der Presszylinder 1, der Kolben 4, sowie der Stempelzylinder 7 bilden eine, durch ihre Achse 7' gekennzeichnete maschinenfeste Baugruppe, die erfindungsgemäß an radialen Ausgleichsbewegungen zwecks Zentrierung gegenüber der Vorform 11 nicht teilnimmt.

Der Pressstempel 9, der Splitring 29, die Ladebuchse 10, der Lagerring 17, der Anschlagring 35, die Distanzbuchse 41, die Stützbuchse 37 sowie die Rückstellfeder 38 bilden eine durch ihre Achse 10' gekennzeichnete Baugruppe, die radial nach Maßgabe der konstruktiv vorgegebenen Spielabmessungen relativ zu der Achse 16 der Vorform 11 justierbar ist. Ein Justieren in diesem Sinne stellt sich somit praktisch als eine Parallelverschiebung der Achse 10' gegenüber der Achse 7' dar, sowie als ein Ausrichten der Achsen 10' und 16.

Die Wirkungsweise dieser vorstehend beschriebenen Vorformstation gestaltet sich wie folgt:

In der in Fig. 1 gezeigten Tiefststellung des Pressstempels 9 ist dieser über den Splitring 29 und den Kupplungskopf 26 auf der Kolbenstange 5 gehalten. Der Splitring 29 ist seinerseits über die Distanzbuchse 41, die Ladebuchse 10 und die Stützbuchse 37 auf dem Zwischenring 6 und damit dem Kopfring 8 des Presszylinders 1 abgestützt. Die Oberkante der Ladebuchse 10 befindet sich unterhalb der zugekehrten Eingangsöffnung 13' des Mündungswerkzeugs 13.

Die Rückstellfeder 38 steht in dieser Betriebsphase unter elastischer Druckvorspannung und hält die Ladebuchse 10 über ihren Ringflansch 36 in Anlage an dem Anschlagring 35. Diese Position ist durch Beaufschlagung der Oberseite des Kolbens 4 gesichert.

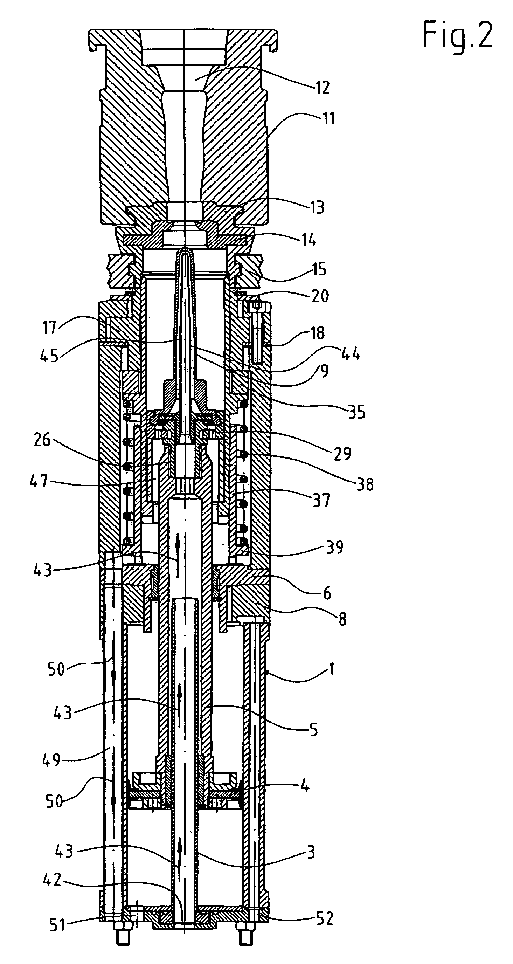

Zur Überführung in die in Fig. 2 gezeigte Ladestellung wird die Oberseite des Kolbens 4 entlüftet, so dass sich die Kolbenstange 5 unter der Wirkung der Rückstellfeder 38 in die in Fig. 2 gezeigte Position bewegt. Die Ladestellung ist dadurch gekennzeichnet, dass infolge einer Aufwärtsbewegung der Kolbenstange 5 in Richtung des Pfeiles 53 die sich entspannende Rückstellfeder 38 über den Ringflansch 36 eine Mitnahmewirkung auf die Ladebuchse 10 ausübt, und zwar bis der Anschlagring 35 an der zugekehrten Kreisringfläche 17" des Lagerrings 17 anliegt. Der Anschlagring 35 begrenzt somit die Aufwärtsbewegung der Ladebuchse 10, welche in der Ladestellung um ein definiertes Maß in das Mündungswerkzeug 13 eingeführt worden ist. Infolge dieses Einführens in das Mündungswerkzeug sind die Ladebuchse 10 und mit dieser auch der Pressstempel 9 zentriert, und zwar bezüglich der Achse 16 des Formhohlraums 12.

Die Ladebuchse 10 ist mit ihrem freien, mit einer Fase 10" versehenen Ende mit einer radialen Gleitpassung in das geschlossene Mündungswerkzeug 13 einführbar. Ein eventueller Fluchtungsfehler zwischen den Achsen der Ladebuchse 10 bzw. des Pressstempels 9 relativ zu der Achse 16 ist dadurch ausgleichbar, dass, wie insbesondere in Fig. 6 gezeigt, ein radiales Spiel zwischen der Außenseite des Außenflansches 17' des Lagerrings 17 und der Innenseite des Kopfrings 19 besteht, welches nach Maßgabe dieses Spieles ein radiales Versetzen der Ladebuchse 10 relativ zu der Achse 7' des Stempelzylinders 7 ermöglicht.

Ein radiales Spiel besteht ferner zwischen den radialen Außenseiten des Außenflansches 39 und des Anschlagringes 35 relativ zu der radialen Innenseite des Stempelzylinders 7. Man erkennt, dass die Baugruppe, die im Wesentlichen aus dem Pressstempel 9, dem Lagerring 17, dem Anschlagring 35, der Ladebuchse 10 sowie der Stützbuchse 37 besteht, radial einstellbar ist, und zwar nach Maßgabe der eingangs erwähnten radialen Freiräume.

Man erkennt ferner, dass zum Zentrieren dieser Baugruppe relativ zu der Achse 16 des Formhohlraumes 12 nur vergleichsweise geringe Massen bewegt werden müssen, wobei der Einstellvorgang auch vergleichsweise leichtgängig abgewickelt werden kann, da entgegenstehende Reibungskräfte erzeugende Anpresskräfte in dieser Phase noch vergleichsweise gering ausfallen, so dass ein dementsprechend geringer Verschleiß erwartet werden kann.

Nachdem zwischen den radialen Abmessungen des Innenflansches 28 und der Ringnut 27 ebenfalls ein radiales Spiel besteht, wird die Kolbenstange 5 von diesen radialen Ausgleichsbewegungen nicht erfasst.

Ausgehend von der durch eine zentrierte Position bezüglich der Achse 16 des Formhohlraums 12 gekennzeichneten Ladestellung wird nunmehr durch Druckbeaufschlagung der Unterseite des Kolbens 4 der Pressstempel 9 in den Formhohlraum 12 eingeführt, der zuvor geschlossen und mit einem Glasposten beschickt worden ist. Die obere Endstellung des Pressstempels 9 ist erreicht, sobald der Formhohlraum 12 vollständig mit schmelzflüssigem Glas gefüllt und ein Külbel fertiggestellt ist.

Ein Zurückfahren des Pressstempels 9 kann durch Druckbeaufschlagung der Oberseite des Kolbens 4 über die Anschlussöffnung 52 erfolgen, woraufhin der Kolben 4 wieder in seine in Fig. 1 wiedergegebene Tiefststellung überführt wird, in welcher der Pressstempel 9 wiederum über den Distanzring 41, die Ladebuchse 10 und die Stützbuchse 37 auf dem Zwischenring 6 und damit dem Presszylinder 1 abgestützt ist.

Von besonderem Vorteil ist, dass jeder Pressstempel 9 nebst Ladebuchse 10 individuell zentriert werden kann, so dass Fluchtungsfehlern des einzelnen Pressstempels bzw. des Formwerkzeugs optimal Rechnung getragen werden kann.

## Patentansprüche

1. Vorformstation einer Press-Blas-Glasformmaschine mit einer, eine Achse (16) aufweisenden Vorform (11). einem längsgeteilten, zwischen der Vorformstation und einer Fertigformstation der Press-Blas-Glasformmaschine hin und her bewegbaren Mündungswerkzeug (13) und einem Pressstempelmechanismus, wobei der Pressstempelmechanismus aufweist:
Einen Presszylinder (1) mit einem wahlweise beidseitig durch ein Druckfluid beaufschlagbaren Kolben (4) und einer sich in Richtung der Vorform (11) aus dem Presszylinder (1) heraus erstreckenden Kolbenstange (5),
einen relativ zu dem Presszylinder (1) koaxial geführten, ein oberes Ende der Kolbenstange (5) umgebenden Stempelzylinder (7) und
einen einerseits mit einem freien Ende der Kolbenstange (5) und andererseits mit einem Flansch (31) eines Pressstempels (9) kuppelbaren, längsgeteilten und in einer Ladebuchse (10) hin und her bewegbar geführten Splitring (29),
wobei die Ladebuchse (10) durch die Kolbenstange (5) gegen die Kraft einer Rückstellfeder (38) in eine von der Vorform (11) am weitesten entfernte Ausgangsstellung bewegbar ist,
und wobei die Ladebuchse (10) bei Bewegung der Kolbenstange (5) in der entgegengesetzten Richtung durch die Rückstellfeder (38) bis in eine Arbeitsstellung in Anlage an dem Stempelzylinder (7) bewegbar ist,
**dadurch gekennzeichnet,**
**dass** eine im Wesentlichen den Presszylinder (1), den Kolben (4), einen mit dem Kolben (4) in Verbindung stehenden; an dem freien Ende der Kolbenstange (5) eingeschraubten Kupplungskopf (26), einen Kopfring (19), die Kolbenstange (5) und den Stempelzylinder (7) umfassende erste, eine Längsachse (7') aufweisende Baueinheit maschinenfest angeordnet ist,
**dass** zur Ausrichtung des Pressstempels (9) relativ zu der Achse (16) des Mündungswerkzeugs (13) sowie der Vorform (11) eine zweite Baueinheit quer zu der Längsachse (7') der ersten Baueinheit und relativ zu der ersten Baueinheit bewegbar ist,
wobei die zweite Baueinheit im Wesentlichen den Splitring (29), den Pressstempel (9), die Ladebuchse (10), einen die Ladebuchse (10) umgebenden Lagerring (17), einen den Pressstempel (9) innerhalb des Splitrings (29) abstützenden Haltering (32), eine die Ladebuchse (10) umgebende Stützbuchse (37), einen, eine Verschiebung der Ladebuchse (10) relativ zu der Stützbuchse (37) begrenzenden, die Ladebuchse (10) umgebenden Anschlagring (35) und die Rückstellfeder (38) umfasst,
wobei zur Darstellung einer quer zu der Längsachse (7') orientierten Bewegbarkeit der zweiten Baueinheit gegenüber der ersten Baueinheit ein radiales Spiel zwischen dem Lagerring (17) und den diesen aufnehmenden Konturen des Kopfringes (19), einem an dem Splitring (29) angeformten Innenflansch (28) und einer Umfangsnut (27) des Kupplungskopfes (26), einem Ansatz (32') des Halterings (32) und dem Kupplungskopf (26) sowie einer radialen Außenseite eines Außenflansches (39) der Stützbuchse (37) sowie des Anschlagringes (35) relativ zu der radialen Innenseite des Stempelzylinders (7) eingerichtet ist und
**dass** die zweite Baueinheit gegenüber der ersten Baueinheit infolge eines Überführens der Ladebuchse (10) ausgehend von der genannten Ausgangsstellung, in der sie nicht mit dem Mündungswerkzeug (13) im Eingriff steht, in das Mündungswerkzeug (13) hinein ausrichtbar ist, wobei die Ladebuchse (10) in ihrer Arbeitsstellung mit einem freien Ende mit einer radialen Gleitpassung in ein freies Ende des geschlossenen Mündungswerkzeugs (13) eingreift und wobei das freie Ende der Ladebuchse (10) und/oder das freie Ende des Mündungswerkzeugs (13) an der einander zugewandten Seite zur Erleichterung des zentrierenden Eindringens der Ladebuchse (10) in das geschlossene Mündungswerkzeug (13) eine Fase (10") aufweist.

2. Vorformstation nach Anspruch 1, **dadurch gekennzeichnet, dass** ein der Vorform (11) zugewandter Bereich der Ladebuchse (10) in dem Lagerring (17) der zweiten Baueinheit verschiebbar gelagert ist und dass der Lagerring (17) einen mit einer axialen Gleitpassung in einem Lagerspalt (19') des Stempelzylinders (7) allseitig radial verschiebbaren Außenflansch (17') aufweist.

3. Vorformstation nach Anspruch 2, **dadurch gekennzeichnet, dass** eine Seite eines Außenflansches (36) der Ladebuchse (10) an dem mit dem Lagerring (17) zusammenwirkenden Anschlagring (35) anliegt, und dass an der gegenüberliegenden Seite des Außenflansches (36) die Rückstellfeder (38) abgestützt ist.

4. Vorformstation nach einem der Ansprüche 1 bis 3, **dadurch gekennzeichnet, dass** ein von der Vorform (11) abgewandter Bereich der Ladebuchse (10) in der Stützbuchse (37) der zweiten Baueinheit verschiebbar ist, dass die Rückstellfeder (38) auf einem Außenflansch (39) der Stützbuchse (37) abgestützt ist, und dass die Stützbuchse (37) radial gleitbar an einem, die Kolbenstange (5) umgebenden Zwischenring (6) des Presszylinders (1) abgestützt ist.

5. Vorformstation nach einem der Ansprüche 1 bis 4, **dadurch gekennzeichnet, dass** ein Flansch (31) des Pressstempels (9) in dem geschlossenen Splitring (29) eingespannt ist und dass der geschlossene Splitring (29) mit einer radialen Gleitpassung in einer Bohrung der Ladebuchse (10) geführt ist.

6. Vorformstation nach einem der Ansprüche 1 bis 5, **dadurch gekennzeichnet, dass** der Pressstempel (9) einen Hohlraum aufweist, dass sich in den Hohlraum ein Durchbrechungen (9') aufweisendes Kühlrohr (44) erstreckt, dass das Kühlrohr (44) an seinem freien Ende einen in einer Bohrung des Flansches (31) des Pressstempels (9) axial verschiebbar geführten Haltering (32) aufweist, und dass der Haltering (32) durch eine an dem Flansch (31) des Pressstempels (9) abgestützte Feder (33) in Dichtberührung mit einer äußeren Ringfläche der eine axiale Durchbrechung aufweisenden Kolbenstange (5) vorgespannt ist.

7. Vorformstation nach Anspruch 6, **dadurch gekennzeichnet, dass** der an dem Haltering (32) angesetzte Ansatz (32') rohrförmig ausgebildet ist und dass sich dieser Ansatz mit allseitigem radialen Spiel in die Durchbrechung der Kolbenstange erstreckt.

8. Vorformstation nach einem der Ansprüche 1 bis 7, **dadurch gekennzeichnet, dass** an einem von der Vorform (11) entfernten Ende der Ladebuchse (10) ein Innenflansch (40) vorgesehen ist, und dass zwischen dem Innenflansch (40) und dem Splitring (29) eine Distanzbuchse (41) von wählbarer axialer Länge angeordnet ist.

## Claims

1. Parison moulding station of a press-and-blow glassware forming machine having a parison mould (11) with an axis (16), a longitudinally divided neck ring (13) which can move in a reciprocating manner between the parison moulding station and a blow-moulding station of the press-and-blow glassware forming machine, and a pressing plunger mechanism, wherein the pressing plunger mechanism comprises:
a pressing cylinder (1) with a piston (4) which can be selectively acted upon on both sides by a compressed fluid, and a piston rod (5) which extends out of the pressing cylinder (1) in the direction of the parison mould (11),
a plunger cylinder (7) coaxially guided relative to the pressing cylinder (1) and surrounding an upper end of the piston rod (5) and
a split ring (29) which can be coupled on the one hand to a free end of the piston rod (5) and on the other hand to a flange (31) of a pressing plunger (9), is longitudinally divided and is guided so as to be able to move in a reciprocating manner in a loading tube (10),
wherein the loading tube (10) can be moved by the piston rod (5) against the force of a return spring (38) into a starting position most distant from the parison mould (11),
and wherein the loading tube (10) can be moved into a working position in contact with the plunger cylinder (7) by the return spring (38) when the piston rod (5) is moving in the opposite direction,
**characterised in that**
a first assembly, essentially comprising the pressing cylinder (1), the piston (4), a coupling head (26), which is connected to the piston (4) and screwed to the free end of the piston rod (5), a head ring (19), the piston rod (5) and the plunger cylinder (7), and having a longitudinal axis (7'), is fixedly disposed with respect to the machine,
in order to orientate the pressing plunger (9) relative to the axis (16) of the neck ring (13) and of the parison mould (11), a second assembly is able to move transverse to the longitudinal axis (7') of the first assembly and relative to the first assembly,
wherein the second assembly essentially includes the split ring (29), the pressing plunger (9), the loading tube (10), a bearing ring (17), which surrounds the loading tube (10), a holding ring (32), which supports the pressing plunger (9) inside the split ring (29), a support bushing (37), which surrounds the loading tube (10), a stop ring (35), which limits a displacement of the loading tube (10) relative to the support bushing (37) and surrounds the loading tube (10), and the return spring (38),
wherein in order to achieve movability - orientated transverse to the longitudinal axis (7') - for the second assembly with respect to the first assembly, radial clearance is provided between the bearing ring (17) and the contours of the head ring (19) receiving this bearing ring, an inner flange (28), integrally formed on the split ring (29), and a peripheral groove (27) of the coupling head (26), a projection (32') on the holding ring (32), and the coupling head (26), and a radial outer side of an outer flange (39) of the support bushing (37) and of the stop ring (35) relative to the radial inner side of the plunger cylinder (7), and
the second assembly can be orientated into the neck ring (13) with respect to the first assembly as a result of a transfer of the loading tube (10) starting from the said starting position, in which it is not in engagement with the neck ring (13), wherein, in its working position, the loading tube (10) engages with one free end with a radial sliding fit into a free end of the closed neck ring (13), and wherein the free end of the loading tube (10) and/or the free end of the neck ring (13) has a chamfer (10") on the mutually facing side in order to facilitate the centring insertion of the loading tube (10) into the closed neck ring (13).

2. Parison moulding station as claimed in claim 1, **characterised in that** a region of the loading tube (10) facing the parison mould (11) is displaceably mounted in the bearing ring (17) of the second assembly and that the bearing ring (17) has an outer flange (17') which can be radially displaced on all sides with an axial sliding fit in a bearing gap (19') of the plunger cylinder (7).

3. Parison moulding station as claimed in claim 2, **characterised in that** one side of an outer flange (36) of the loading tube (10) lies against the stop ring (35) cooperating with the bearing ring (17), and that the return spring (38) is supported on the opposite side of the outer flange (36).

4. Parison moulding station as claimed in any one of claims 1 to 3, **characterised in that** a region of the loading tube (10) facing away from the parison mould (11) can be displaced in the support bushing (37) of the second assembly, that the return spring (38) is supported on an outer flange (39) of the support bushing (37) and that the support bushing (37) is supported in a radially slideable manner on an intermediate ring (6) of the pressing cylinder (1) surrounding the piston rod (5).

5. Parison moulding station as claimed in any one of claims 1 to 4, **characterised in that** a flange (31) of the pressing plunger (9) is clamped in the closed split ring (29) and that the closed split ring (29) is guided with a radial sliding fit in a bore of the loading tube (10).

6. Parison moulding station as claimed in any one of claims 1 to 5, **characterised in that** the pressing plunger (9) has a chamber, that a cooling pipe (44) comprising orifices (9') extends into the chamber, that the cooling pipe (44) at its free end has a holding ring (32) which is guided in an axially displaceable manner in a bore in the flange (31) of the pressing plunger (9), and that the holding ring (32) is pretensioned by a spring (33), which is supported on the flange (31) of the pressing plunger (9), in sealing contact with an outer annular surface of the piston rod (5) comprising an axial orifice.

7. Parison moulding station as claimed in claim 6, **characterised in that** the projection (32') located on the holding ring (32) is formed in a tubular manner and that this projection extends with radial clearance on all sides into the orifice in the piston rod.

8. Parison moulding station as claimed in any one of claims 1 to 7, **characterised in that** at an end of the loading tube (10) remote from the parison mould (11) an inner flange (40) is provided, and that a spacing bushing (41) of selectable axial length is disposed between the inner flange (40) and the split ring (29).

## Revendications

1. Station à moule ébaucheur d'une machine à façonner le verre en pressé-soufflé, comprenant un moule ébaucheur (11) avec un axe (16), un outil d'embouchure (13) divisé en longueur et déplaçable en va-et-vient entre la station à moule ébaucheur et une station à moule finisseur de la machine à façonner le verre en pressé-soufflé, et un mécanisme à poinçon ébaucheur, ledit mécanisme à poinçon ébaucheur comportant :
un cylindre de compression (1) avec un piston (4) pouvant subir la pression d'un fluide hydraulique sur l'un ou l'autre de ses côtés au choix, et une tige de piston (5) s'étendant en direction du moule ébaucheur (11) depuis le cylindre de compression (1),
un cylindre à poinçon (7) fixé coaxialement par rapport au cylindre de compression (1) et entourant une extrémité supérieure de la tige de piston (5), et
une bague fendue (29) pouvant être accouplée avec une extrémité libre de la tige de piston (5) d'un côté, et avec une bride (31) d'un poinçon ébaucheur (9) de l'autre côté, divisée en longueur et coulissant en va-et-vient dans une douille de chargement (10),
la douille de chargement (10) étant déplaçable par la tige de piston (5) vers une position initiale distante au maximum du moule ébaucheur (11), contre la force d'un ressort de rappel (38),
et la douille de chargement (10) étant déplaçable jusque vers une position de travail en butée contre le cylindre à poinçon (7), en cas de déplacement de la tige de piston (5) dans la direction opposée par le ressort de rappel (38)
**caractérisée**
**en ce qu'**une première unité modulaire avec un axe longitudinal (7'), comprenant essentiellement le cylindre de compression (1), le piston (4), une tête d'accouplement (26) en liaison avec le piston (4), vissée sur l'extrémité libre de la tige de piston (5), une bague de tête (19), la tige de piston (5) et le cylindre à poinçon (7), est fixement disposée sur la machine,
**en ce que** pour l'alignement du poinçon ébaucheur (9) par rapport à l'axe (16) de l'outil d'embouchure (13) et du moule ébaucheur (11), une deuxième unité modulaire est déplaçable transversalement à l'axe longitudinal (7') de la première unité modulaire et par rapport à la première unité modulaire,
la deuxième unité modulaire comprenant essentiellement la bague fendue (29), le poinçon ébaucheur (9), la douille de chargement (10), une bague de palier (17) entourant la douille de chargement (10), une bague de maintien (32) maintenant le poinçon ébaucheur (9) à l'intérieur de la bague fendue (29), une douille de support (37) entourant la douille de chargement (10), une bague de butée (35) entourant la douille de chargement (10) et limitant le déplacement de la douille de chargement (10) par rapport à la douille de support (37), ainsi que le ressort de rappel (38),
un jeu radial étant ajusté pour l'obtention d'une mobilité de la deuxième unité modulaire par rapport à la première unité modulaire dans un sens transversal à l'axe longitudinal (7'), entre la bague de palier (17) et les contours de la bague de tête (19) recevant celle-ci, une bride intérieure (28) formée sur la bague fendue (29) et une rainure périphérique (27) de la tête d'accouplement (26), un épaulement (32') de la bague de maintien (32) et la tête d'accouplement (26) ainsi qu'entre une face radiale extérieure d'une bride extérieure (39) de la douille de support (37) et de la bague de butée (35) par rapport à la face radiale intérieure du cylindre à poinçon (7), et
**en ce que** la deuxième unité modulaire peut être alignée par rapport à la première unité modulaire à la suite d'un déplacement de la douille de chargement (10) de ladite position initiale, où elle n'est pas en prise avec l'outil d'embouchure (13), vers l'intérieur de l'outil d'embouchure (13), la douille de chargement (10) s'engageant, dans sa position de travail, par une extrémité libre avec un ajustement glissant radial dans une extrémité libre de l'outil d'embouchure (13) fermé, et l'extrémité libre de la douille de chargement (10) et/ou l'extrémité libre de l'outil d'embouchure (13) présentant un biseau (10") sur le côté opposé pour faciliter la pénétration de centrage de la douille de chargement (10) dans l'outil d'embouchure (13) fermé.

2. Station à moule ébaucheur selon la revendication 1, **caractérisée en ce qu'**une partie de la douille de chargement (10) opposée au moule ébaucheur (11) est montée de manière à être déplaçable dans la bague de palier (17) de la deuxième unité modulaire, et **en ce que** la bague de palier (17) comporte une bride extérieure (17') radialement déplaçable omnidirectionnellement avec un ajustement glissant radial dans une fente de palier (19') du cylindre à poinçon (7).

3. Station à moule ébaucheur selon la revendication 2, **caractérisée en ce qu'**une face de la bride extérieure (36) repose contre la bague de butée (35) coopérant avec la bague de palier (17), et **en ce que** le ressort de rappel (38) s'appuie sur la face opposée de la bride extérieure (36).

4. Station à moule ébaucheur selon l'une des revendications 1 à 3, **caractérisée en ce qu'**une partie de la douille de chargement (10) distante du moule ébaucheur (11) est déplaçable dans la douille de support (37) de la deuxième unité modulaire, **en ce que** le ressort de rappel (38) s'appuie sur une bride extérieure (39) de la douille de support (37), et **en ce que** la douille de support (37) s'appuie de manière à être radialement coulissante sur une bague intercalaire (6) du cylindre de compression (1) qui entoure la tige de piston (5).

5. Station à moule ébaucheur selon l'une des revendications 1 à 4, **caractérisée en ce qu'**une bride (31) du poinçon ébaucheur (9) est serrée dans la bague fendue (29) fermée, et **en ce que** la bague fendue (29) fermée est guidée avec un ajustement glissant radial dans un alésage de la douille de chargement (10).

6. Station à moule ébaucheur selon l'une des revendications 1 à 5, **caractérisée en ce que** le poinçon ébaucheur (9) comporte une cavité, **en ce qu'**un conduit de refroidissement (44) pourvu de perforations (9') s'étend dans la cavité, **en ce que** le conduit de refroidissement (44) comporte à son extrémité libre une bague de maintien (32) coulissante, axialement déplaçable dans un alésage de la bride (31) du poinçon ébaucheur (9), et **en ce que** la bague de maintien (32) est pré-contrainte par un ressort (33) s'appuyant sur la bride (31) du poinçon ébaucheur (9), en contact d'étanchéité avec une surface annulaire extérieure de la tige de piston (5) pourvue d'un perçage axial.

7. Station à moule ébaucheur selon la revendication 6, **caractérisée en ce que** l'épaulement (32') formé sur la bague de maintien (32) est de forme tubulaire, et **en ce que** ledit épaulement s'étend dans le perçage de la tige de piston avec un jeu radial omnidirectionnel.

8. Station à moule ébaucheur selon l'une des revendications 1 à 7, **caractérisée en ce qu'**une bride intérieure (40) est prévue à une extrémité de la douille de chargement (10) distante du moule ébaucheur (11), et **en ce qu'**une douille d'écartement (41) d'une longueur axiale sélectionnable est disposée entre la bride intérieure (40) et la bague fendue (29).
